# EUROPÄISCHE PATENTANMELDUNG

(11) **EP 3 205 540 A1**
(43) Veröffentlichungstag der Anmeldung: **16.08.2017**
(21) Anmeldenummer: 16465504.5
(22) Anmeldetag: 09.02.2016
(51) Int. Cl.: B60W 30/09, G08G 1/16

(54) **FAHRERASSISTENZVORRICHTUNG SOWIE EIN VERFAHREN ZUR UNTERSTÜTZUNG EINES FAHRZEUGFÜHRERS BEIM FÜHREN EINES FAHRZEUGS**

(71) Anmelder: Continental Automotive GmbH, 30165 Hannover (DE)
(72) Erfinder: Son, Andrei, 300588 Timisoara (RO)
(74) Vertreter: Büchner, Jörg

(57) **Zusammenfassung**

Die Erfindung betrifft eine Fahrerassistenzvorrichtung 1 für ein Fahrzeug 2, mit einer Bildaufnahmeeinheit 3 zur Aufnahme mindestens eines Bilds eines vorausliegenden Umgebungsbereichs des Fahrzeugs 2, mit einer Auswerteeinrichtung 4, welche zur Auswertung von mindestens einem kinderbezogenen Objekt 5 aus dem mindestens einen von der Bildaufnahmeeinheit 3 aufgenommenen Bild ausgebildet ist, mit einer Steuereinrichtung 6, welche in Abhängigkeit eines von der Auswerteeinrichtung 4 ausgewerteten Abstands A1 des Fahrzeugs 2 zum kinderbezogenen Objekt 5 ausgebildet ist, mindestens eine Kollisionsprävention des Fahrzeugs 2 mit einer potenziell erscheinenden, dem kinderbezogenen Objekt 5 zugehörigen Person 7 einzuleiten.

## Beschreibung

Die Erfindung betrifft eine Fahrerassistenzvorrichtung gemäß dem Oberbegriff des Anspruchs 1. Ferner betrifft die Erfindung ein Fahrzeug mit der Fahrerassistenzvorrichtung sowie ein Verfahren zur Unterstützung eines Fahrzeugführers beim Führen eines Fahrzeugs.

Moderne Fahrerassistenzsysteme dienen zur Unterstützung des Fahrers in Gefahrensituationen, um einen Unfall zu verhindern oder zumindest die Folgen eines Unfalls abzumildern. Häufig Verunglückte im Straßenverkehr sind Kinder, welche aus Sicht eines Fahrzeugführers die Fahrbahn oftmals überraschend betreten. Die häufigsten Fehlverhaltensweisen bei Unfällen mit Kindern als Fußgänger sind das plötzliche Überqueren der Fahrbahn und das plötzliche Hervortreten hinter Sichthindernissen ohne auf den Verkehr zu achten.

Aus der Druckschrift EP 2400473 A1 ist ein Verfahren zum Unterstützen eines Fahrzeugführers eines Kraftwagens bekannt. Es wird mindestens ein visuelles Merkmal eines Objekts erfasst. Das Objekt wird zu einer von mindestens zwei Objektkategorien gemäß einer ersten vorgegebenen Bewertung anhand des mindestens einen visuellen Merkmals zugeordnet, wobei für eine erste der mindestens zwei Objektkategorien ein Unterstützen des Fahrzeugführers als notwendig eingestuft ist und für eine zweite der mindestens zwei Objektkategorien ein Unterstützen des Fahrzeugführers als nicht notwendig eingestuft ist.

Der Erfindung liegt die Aufgabe zugrunde, eine Erhöhung der Verkehrssicherheit für Kinder zu erzielen.

Diese Aufgabe wird durch eine Fahrerassistenzvorrichtung mit den Merkmalen des Anspruchs 1, durch ein Fahrzeug mit den Merkmalen des Anspruchs 9 sowie durch ein Verfahren mit den Merkmalen des Anspruchs 10 gelöst. Vorteilhafte oder bevorzugte Ausführungsformen der Erfindung sind in den Unteransprüchen, der nachfolgenden Beschreibung und durch die Figuren dargelegt.

Es wird eine Fahrerassistenzvorrichtung für ein Fahrzeug vorgeschlagen. Insbesondere ist die Fahrerassistenzvorrichtung während der Fahrt des Fahrzeugs ausgebildet, eine Kollision mit einer Person, im Speziellen mit einem Kind zu verhindern oder zumindest abzumildern.

Die Fahrerassistenzvorrichtung umfasst eine Bildaufnahmeeinheit zur Aufnahme mindestens eines Bilds eines vorausliegenden Umgebungsbereichs des Fahrzeugs. Beispielsweise ist die Bildaufnahmeeinheit im Innenraum des Fahrzeugs und/oder außenseitig an der Fahrzeugkarosserie anzuordnen bzw. angeordnet. Vorzugsweise weist die Bildaufnahmeeinheit mindestens eine Optik zur Projektion von Licht sowie mindestens einen Bildsensor wie z. B. einen CMOS-Sensor zur Erfassung des von der Optik projizierten Lichts auf. Die Bildaufnahmeeinheit kann z. B. mindestens oder genau eine Mono- oder eine Stereokamera umfassen oder als diese ausgebildet sein. Die Bildaufnahmeeinheit kann auch als Rundumsichtkamerasystem ausgebildet sein, welches durch eine Mehrzahl von Einzelkameras, bevorzugt mit einem großen Öffnungswinkel, eine Erfassung von 360° um das Fahrzeug ermöglicht.

Die Fahrerassistenzvorrichtung weist eine Auswerteeinrichtung auf, welche ausgebildet ist, mindestens ein kinderbezogenes Objekt aus dem mindestens einen von der Bildaufnahmeeinheit aufgenommenen Bild auszuwerten. Insbesondere ist die Auswerteeinrichtung zur Auswertung eines Abstands zwischen dem Fahrzeug und dem kinderbezogenen Objekt aus dem mindestens einen aufgenommenen Bild ausgebildet. Vorteilhafterweise ermöglicht die Bildaufnahmeeinheit die Aufnahme eines Bildes mit einer hohen Auflösung und Farbinformationen. Somit sind die kinderbezogenen Objekte zuverlässig auswertbar.

Vorzugsweise handelt es sich bei dem kinderbezogenen Objekt um einen von vorwiegend von Kindern benutzten Gegenstand. Somit lässt das kinderbezogene Objekt insbesondere auf die Anwesenheit eines Kindes im Straßenverkehr zurückschließen. Beispielsweise ist das kinderbezogene Objekt ein stehendes, somit ein unbewegtes Objekt wie ein am Fahrbahnrand oder auf der Fahrbahn stehendes Fahrrad, Spielauto oder ein Skateboard. Weiterhin ist möglich, dass es sich bei dem kinderbezogenen Objekt um ein sich fortbewegendes Objekt wie ein ferngesteuertes Spielzeugauto oder ein fortbewegendes Objekt mit einer Ballform, insbesondere ein Basketball, Fußball, Volleyball, Tennisball oder Federball handelt.

Weiterhin umfasst die Fahrerassistenzvorrichtung eine Steuereinrichtung, wobei die Steuereinrichtung ausgebildet ist, in Abhängigkeit des von der Auswerteeinrichtung ausgewerteten Abstands des Fahrzeugs zum kinderbezogenen Objekt mindestens eine Kollisionsprävention des Fahrzeugs mit einer potenziell erscheinenden, dem kinderbezogenen Objekt zugehörigen Person einzuleiten. Somit erfolgt eine präventive Maßnahme zum Kollisionsschutz mit einer potenziell erscheinenden Person, welche beispielsweise durch ein Sichthindernis wie ein parkendes Fahrzeug für den Fahrzeugführer und/oder insbesondere die Auswerteeinrichtung nicht oder noch nicht ersichtlich sind. Folglich wird die Kollisionsprävention insbesondere bereits bei einer noch bislang unentdeckten, der dem kinderbezogenen Objekt zugehörigen Person eingeleitet. Auf diese Weise soll eine frühzeitige Reaktion durch den Fahrzeugführer und/oder durch die Fahrerassistenzvorrichtung auf potenziell vor das Fahrzeug laufende Kinder ermöglicht und somit das Unfallrisiko mit Kindern reduziert werden.

Bei einer bevorzugten Ausführungsform ist die Steuereinrichtung ausgebildet, den Abstandsgrenzwert in Abhängigkeit von der Fahrzeuggeschwindigkeit, von dem Fahrbahnzustand und/oder von den Wetterverhältnissen festzulegen. Sowohl der Fahrbahnzustand, als auch widrige Wetterverhältnisse beeinflussen insbesondere das Brems- und/oder Lenkverhalten des Fahrzeugs. Somit nimmt vorzugsweise mit zunehmender Fahrzeuggeschwindigkeit, bei einer Verschlechterung des Fahrbahnzustands und/oder der Wetterverhältnisse der Abstandsgrenzwert zu.

Besonders bevorzugt ist die Steuereinrichtung ausgebildet, eine derartige Geschwindigkeitsreduzierung als die mindestens eine Kollisionsprävention einzuleiten, dass im Falle der erscheinenden, dem kinderbezogenen Objekt zugehörigen Person ein rechtzeitiges Anhalten des Fahrzeugs möglich ist. Die Geschwindigkeitsreduzierung dient somit zur Einleitung einer Unfallvermeidung oder zumindest einer Unfallverminderung, ohne durch einen zu starken Eingriff eine ggf. unnötige Gefährdung für den Umgebungsverkehr zu schaffen.

Weiterhin ist die Steuereinrichtung insbesondere ausgebildet, das Fahrzeug bei einer ausgewerteten der dem kinderbezogenen Objekt zugehörigen Person anzuhalten. Vorteilhaft an der Umsetzung ist, dass insbesondere eine Notbremsung erst zum Zeitpunkt einer unmittelbar bevorstehenden Kollisionsgefahr erfolgt.

Alternativ oder optional ergänzend ist die Steuereinrichtung bei einer ausgewerteten der dem kinderbezogenen Objekt zugehörigen Person vorzugsweise ausgebildet, eine Ausweichtrajektorie des Fahrzeugs zur Person einzuleiten. Mit anderen Worten erfolgt insbesondere ein Eingriff in die Lenkung des Fahrzeugs. Das Einleiten der Ausweichtrajektorie ist insbesondere dann von Vorteil, sollte eine Kollision mit der zugehörigen Person auch bei einem einzuleitenden bzw. eingeleiteten Bremsvorgang nicht auszuschließen sein.

Vorzugsweise ist die Auswerteeinrichtung zur Auswertung der dem kinderbezogenen Objekt zugehörigen Person aus dem mindestens einen von der Bildaufnahmeeinheit aufgenommenen Bild ausgebildet. Vorzugsweise ist eine Person als die dem kinderbezogenen Objekt zugehörige Person ausgewertet, sollte ein Abstand zwischen der Person und dem kinderbezogenen Objekt einen insbesondere durch die Auswerteeinrichtung vorgegebenen Abstandsgrenzwert unterschreiten oder sich innerhalb eines vorgegebenen Abstandsgrenzwertbereichs befinden, eine Person sich auf das stehende, kinderbezogene Objekt zubewegen und/oder die Person und das fortbewegende, kinderbezogene Objekt die gleiche Bewegungsrichtung aufweisen.

Einen weiteren Gegenstand der Erfindung betrifft ein Fahrzeug mit einer Fahrerassistenzvorrichtung nach der vorhergehenden Beschreibung.

Ferner betrifft die Erfindung ein Verfahren zur Unterstützung eines Fahrzeugführers beim Führen eines Fahrzeugs mit einer Fahrerassistenzvorrichtung nach der vorhergehenden Beschreibung. In einem ersten Schritt wird mindestens ein Bild, insbesondere eine Bildfolge eines vorausliegenden Umgebungsbereichs des Fahrzeugs aufgenommen. In einem nächsten Schritt wird aus dem mindestens einen aufgenommenen Bild ein kinderbezogenes Objekt insbesondere mittels bildverarbeitenden Algorithmen ausgewertet. Weiterhin wird mindestens eine Kollisionsprävention des Fahrzeugs mit einer potenziell erscheinenden, dem kinderbezogenen Objekt zugehörigen Person in Abhängigkeit eines ausgewerteten Abstands des Fahrzeugs zum kinderbezogenen Objekt eingeleitet.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: in einer schematischen Darstellung eine erfindungsgemäße Fahrerassistenzvorrichtung;
- Figur 2: in einer Vogelperspektive ein Fahrzeug mit der Fahrerassistenzvorrichtung aus Figur 1 zur Auswertung eines kinderbezogenen Objekts;
- Figur 3: ebenfalls in der Vogelperspektive die Fahrerassistenzvorrichtung aus Figur 1 zur Auswertung einer dem kinderbezogenen Objekt zugehörigen Person.

Einander entsprechende Teile sind in allen Figuren mit den gleichen Bezugszeichen versehen.

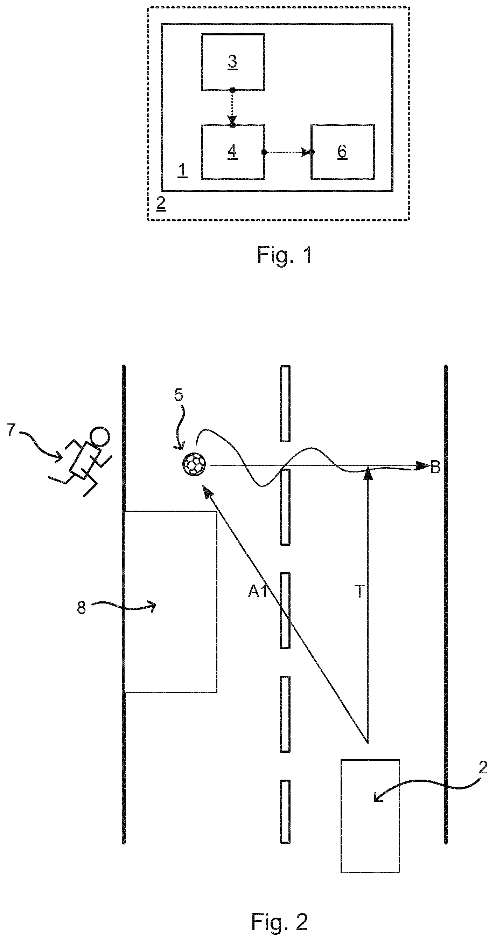

Figur 1 zeigt in einer schematischen Blockdarstellung eine Fahrerassistenzvorrichtung 1, welche in einem Fahrzeug 2 angeordnet ist. Die Fahrerassistenzvorrichtung 1 ist insbesondere zur Unterstützung eines Fahrzeugführers des Fahrzeugs 2 während einer potenziell bevorstehenden Kollision mit einer Person, insbesondere einem Kind ausgebildet.

Die Fahrerassistenzvorrichtung 1 umfasst eine Bildaufnahmeeinheit 3 zur Aufnahme von mindestens einem Bild eines vorausliegenden Umgebungsbereichs des Fahrzeugs 1. Beispielsweise umfasst die Bildaufnahmeeinheit 3 mindestens eine Frontkamera zur Aufnahme des vorausliegenden Umgebungsbereichs. Bei der Frontkamera handelt es sich z. B. um eine Stereokamera.

Die Fahrerassistenzvorrichtung 1 weist eine Auswerteeinrichtung 4 auf, wobei die Bildaufnahmeeinheit 3 mit der Auswerteeinrichtung 4 zur Übermittlung des mindestens einen Bilds verbunden ist. Die Auswerteeinrichtung 4 ist ausgebildet, aus dem mindestens einen von der Bildaufnahmeeinheit 3 übermittelten Bild ein kinderbezogenes Objekt 5, mit anderen Worten insbesondere ein für ein Kind interessantes Objekt, im Speziellen ein Spielzeug auszuwerten. Somit handelt es sich bei dem kinderbezogenen Objekt 5 vorzugsweise um einen Gegenstand, welcher auf ein im Umgebungsbereich befindliches Kind zurückschließen lässt. Bei dem kinderbezogenen Objekt 5 kann es sich um ein stehendes Objekt wie z. B. ein abgestelltes Fahrrad oder um ein fortbewegendes Objekt wie z. B. einen Ball handeln. Beispielsweise erfolgt die Auswertung des kinderbezogenen Objekts 5 mittels eines Farb- und/oder Musteralgorithmus. Weiterhin ist die Auswerteeinrichtung 4 aus dem mindestens einen von der Bildaufnahmeeinheit 3 übermittelten Bild ausgebildet, einen Abstand A1 des Fahrzeugs 2 zu dem von der Auswerteeinrichtung 4 ausgewerteten Objekt 5 auszuwerten.

Kinder nutzen den Verkehrsraum gerne als Spielraum und als Treffpunkt für Gruppenaktivitäten und können hierbei oftmals die Risiken und Gefahren des Straßenverkehrs nicht korrekt einschätzen. Vor diesem Hintergrund umfasst die Fahrerassistenzvorrichtung 1 eine Steuereinrichtung 6, welche ausgebildet ist, in Abhängigkeit des von der Auswerteeinrichtung 4 ausgewerteten Abstands A1 des Fahrzeugs 2 zum Objekt 5 eine Kollisionsprävention des Fahrzeugs 2 mit einer potenziell erscheinenden, dem kinderbezogenen Objekt 5 zugehörigen Person 7 einzuleiten. Auf diese Weise sollen Verkehrsunfälle mit Kindern, welche oftmals des Straßenverkehrs ungeachtet auf die Straße laufen, reduziert werden.

Bei der Kollisionsprävention handelt es sich insbesondere um ein aktives Eingreifen in die Fahrzeugdynamik des Fahrzeugs 2 durch die Steuereinrichtung 6. Beispielsweise wird das Fahrzeug 2 durch eine Wegnahme von Gas und/oder durch das Einleiten eines Bremsvorgangs verlangsamt oder gestoppt. Sollte sich das kinderbezogene Objekt 5 beispielsweise in der Nähe der Fahrzeugtrajektorie T, z. B. am Fahrbahnrand innerhalb von weniger als fünf Meter zur Fahrzeugtrajektorie T befinden, ist die Steuereinrichtung 6 insbesondere ausgebildet, die Geschwindigkeit derart zu reduzieren, dass bei einem Erscheinen der dem kinderbezogenen Objekt 5 zugehörigen Person 7 ein rechtzeitiges Anhalten des Fahrzeugs 2 ermöglicht ist. Die Fahrzeugtrajektorie T kann z. B. mittels des Fahrspurverlaufs von der das Fahrzeug 2 aktuell befindlichen Fahrbahn und/oder anhand der durch den Fahrzeugführer ausgeführten Lenkrichtung ermittelt werden.

Figur 2 zeigt ein beispielhaftes Verkehrsszenario mit einem Kind 7, welches auf die Fahrbahn rennt, um einen Fußball 5 zu holen, sich jedoch aktuell noch hinter einem Sichthindernis 8 befindet und somit für den Fahrzeugführer und die Auswerteeinrichtung 4 nicht ersichtlich ist.

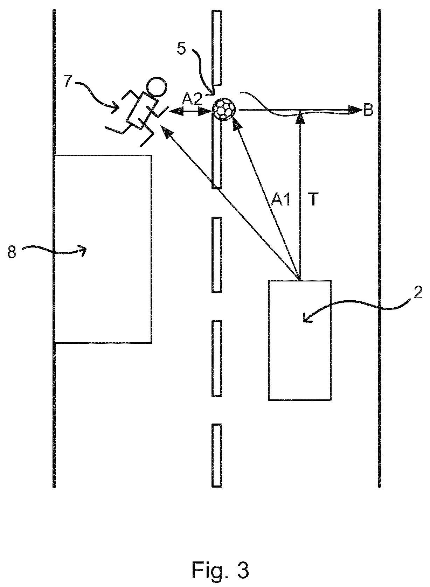

Die Auswerteeinrichtung 4 ist ausgebildet, das kinderbezogene Objekt 5, in diesem Ausführungsbeispiel den Fußball auszuwerten. Beispielsweise ist die Kollisionsprävention, insbesondere die Geschwindigkeitsreduzierung durch die Steuereinrichtung 6 eingeleitet, sollte ein Abstand A1 zwischen dem Fahrzeug 2 und dem kinderbezogenen Objekt 5 durch die Auswerteeinrichtung 4 ausgewertet sein, welcher den festgelegten Abstandsgrenzwert unterschreitet. Der festgelegte Abstandsgrenzwert ist z. B. in Abhängigkeit von der Fahrzeuggeschwindigkeit, von dem Fahrbahnzustand und/oder von den Wetterverhältnissen festgelegt. Beispielsweise wird die Fahrzeuggeschwindigkeit derart reduziert, dass bei einem Erscheinen der Person 7, gemäß Figur 3 durch das Hervortreten hinter dem Sichthindernis 8, ein rechtzeitiges Anhalten möglich ist.

Die Auswertung der dem kinderbezogenen Objekt 5 zugehörigen Person 7 erfolgt insbesondere durch die Auswerteeinrichtung 4 aus dem mindestens einen aufgenommenen Bild. Beispielsweise ist eine Person als die zugehörige Person 7 ausgewertet, sollte ein Abstand A2 zwischen dem kinderbezogenen Objekt 5 und der Person 7 durch die Auswerteeinrichtung 4 ausgewertet sein, welcher einen festgelegten Abstandsgrenzwert unterschreitet. Handelt es sich bei dem kinderbezogenen Objekt 5 um ein sich fortbewegendes Objekt 5 wie z. B. der in Figur 3 gezeigte Fußball, ist die Auswerteeinrichtung 4 zur Auswertung der Bewegungsrichtungen B des fortbewegenden Objekts 5 und der Person 7 ausgebildet. Insbesondere ist die Person als die zugehörige Person 7 ausgewertet, sollten das fortbewegende Objekt 5 und die Person 7 die gleiche Bewegungsrichtung B aufweisen. Die Bewegungsrichtung B des fortbewegenden Objekts 5 und/oder der zugehörigen Person 7 werden beispielsweise aus Bildfolgen den von der Bildaufnahmeeinheit 4 übermittelten Bildern ausgewertet.

### Bezugszeichenliste

- 1: Fahrerassistenzvorrichtung
- 2: Fahrzeug
- 3: Bildaufnahmeeinheit
- 4: Auswerteeinrichtung
- 5: Kinderbezogenes Objekt
- 6: Steuereinrichtung
- 7: Dem kinderbezogenen Objekt zugehörige Person
- 8: Sichthindernis
- A1: Abstand zwischen Fahrzeug zum kinderbezogenen Objekt
- A2: Abstand zwischen kinderbezogenen Objekt und der dem kinderbezogenen Objekt zugehörige Person
- B: Bewegungsrichtung

## Patentansprüche

1. Fahrerassistenzvorrichtung (1) für ein Fahrzeug (2)
mit einer Bildaufnahmeeinheit (3) zur Aufnahme mindestens eines Bilds eines vorausliegenden Umgebungsbereichs des Fahrzeugs (2),
mit einer Auswerteeinrichtung (4), welche ausgebildet ist, mindestens ein kinderbezogenes Objekt (5) aus dem mindestens einen von der Bildaufnahmeeinheit (3) aufgenommenen Bild auszuwerten,
mit einer Steuereinrichtung (6), welche ausgebildet ist, in Abhängigkeit eines von der Auswerteeinrichtung (4) ausgewerteten Abstands (A1) des Fahrzeugs (2) zum kinderbezogenen Objekt (5) mindestens eine Kollisionsprävention des Fahrzeugs (2) mit einer potenziell erscheinenden, dem kinderbezogenen Objekt (5) zugehörigen Person (7) einzuleiten.

2. Fahrerassistenzvorrichtung (1) nach Anspruch 1, wobei das kinderbezogene Objekt (5) ein stehendes Objekt, insbesondere ein stehendes Kinderfahrrad oder ein stehendes Skateboard ist.

3. Fahrerassistenzvorrichtung (1) nach Anspruch 1, wobei das kinderbezogene Objekt (5) ein fortbewegendes Objekt, insbesondere ein fortbewegendes Objekt mit einer Ballform ist.

4. Fahrerassistenzvorrichtung (1) nach einem der vorhergehenden Ansprüche, wobei die mindestens eine Kollisionsprävention durch die Steuereinrichtung (6) eingeleitet ist, sollte ein festgelegter Abstandsgrenzwert zwischen dem Fahrzeug (2) und dem ausgewerteten kinderbezogenen Objekt (5) unterschritten worden sein.

5. Fahrerassistenzvorrichtung (1) nach Anspruch 4, wobei die Steuereinrichtung (6) ausgebildet ist, den Abstandsgrenzwert in Abhängigkeit von der Fahrzeuggeschwindigkeit des Fahrzeugs (2), von dem Fahrbahnzustand und/oder von den Wetterverhältnissen festzulegen.

6. Fahrerassistenzvorrichtung (1) nach einem der vorhergehenden Ansprüche, wobei die Steuereinrichtung (6) ausgebildet ist, eine derartige Geschwindigkeitsreduzierung als die mindestens eine Kollisionsprävention einzuleiten, dass im Falle der erscheinenden, dem kinderbezogenen Objekt (5) zugehörigen Person (7) ein rechtzeitiges Anhalten des Fahrzeugs (6) möglich ist.

7. Fahrerassistenzvorrichtung (1) nach einem der vorhergehenden Ansprüche, wobei die Steuereinrichtung (6) ausgebildet ist, das Fahrzeug (2) bei einer Auswertung der dem kinderbezogenen Objekt zugehörigen Person (7) anzuhalten.

8. Fahrerassistenzvorrichtung (1) nach einem der vorhergehenden Ansprüche, wobei eine Person als die dem kinderbezogenen Objekt (5) zugehörige Person (7) ausgewertet ist, sollte ein Abstand (A2) zwischen der Person und dem kinderbezogenen Objekt (5) einen vorgegebenen Abstandsgrenzwert unterschreiten, die Person sich auf das stehende Objekt (5) zubewegen und/oder die Person und das fortbewegende Objekt (5) die gleiche Bewegungsrichtung (B) aufweisen.

9. Fahrzeug (2) mit einer Fahrerassistenzvorrichtung (1) nach einem der vorhergehenden Ansprüche.

10. Verfahren zur Unterstützung eines Fahrzeugführers beim Führen eines Fahrzeugs (2) mit einer Fahrerassistenzvorrichtung (1) nach einem der vorhergehenden Ansprüche 1 bis 9, **gekennzeichnet durch** folgende Schritte:
a) Aufnahme mindestens eines Bilds eines vorausliegenden Umgebungsbereichs des Fahrzeugs;
b) Auswertung von mindestens einem kinderbezogenen Objekt aus dem mindestens einen aufgenommenen Bild;
c) Einleiten von mindestens einer Kollisionsprävention des Fahrzeugs (2) mit einer potenziell erscheinenden, dem kinderbezogenen Objekt (5) zugehörigen Person (7) in Abhängigkeit eines ausgewerteten Abstands (A1) des Fahrzeugs (2) zum kinderbezogenen Objekt (5).

## Geänderte Patentansprüche

### Geänderte Patentansprüche gemäss Regel 137(2) EPÜ.

1. Fahrerassistenzvorrichtung (1) für ein Fahrzeug (2)
mit einer Bildaufnahmeeinheit (3) zur Aufnahme mindestens eines Bilds eines vorausliegenden Umgebungsbereichs des Fahrzeugs (2),
mit einer Auswerteeinrichtung (4), welche ausgebildet ist, mindestens ein kinderbezogenes Objekt (5) aus dem mindestens einen von der Bildaufnahmeeinheit (3) aufgenommenen Bild auszuwerten,
**gekennzeichnet durch** eine Steuereinrichtung (6), welche ausgebildet ist, in Abhängigkeit eines von der Auswerteeinrichtung (4) ausgewerteten Abstands (A1) des Fahrzeugs (2) zum kinderbezogenen Objekt (5) mindestens eine Kollisionsprävention des Fahrzeugs (2) mit einer potenziell erscheinenden, dem kinderbezogenen Objekt (5) zugehörigen Person (7) einzuleiten.

2. Fahrerassistenzvorrichtung (1) nach Anspruch 1, wobei das kinderbezogene Objekt (5) ein stehendes Objekt, insbesondere ein stehendes Kinderfahrrad oder ein stehendes Skateboard ist.

3. Fahrerassistenzvorrichtung (1) nach Anspruch 1, wobei das kinderbezogene Objekt (5) ein fortbewegendes Objekt, insbesondere ein fortbewegendes Objekt mit einer Ballform ist.

4. Fahrerassistenzvorrichtung (1) nach einem der vorhergehenden Ansprüche, wobei die mindestens eine Kollisionsprävention durch die Steuereinrichtung (6) eingeleitet ist, sollte ein festgelegter Abstandsgrenzwert zwischen dem Fahrzeug (2) und dem ausgewerteten kinderbezogenen Objekt (5) unterschritten worden sein.

5. Fahrerassistenzvorrichtung (1) nach Anspruch 4, wobei die Steuereinrichtung (6) ausgebildet ist, den Abstandsgrenzwert in Abhängigkeit von der Fahrzeuggeschwindigkeit des Fahrzeugs (2), von dem Fahrbahnzustand und/oder von den Wetterverhältnissen festzulegen.

6. Fahrerassistenzvorrichtung (1) nach einem der vorhergehenden Ansprüche, wobei die Steuereinrichtung (6) ausgebildet ist, eine derartige Geschwindigkeitsreduzierung als die mindestens eine Kollisionsprävention einzuleiten, dass im Falle der erscheinenden, dem kinderbezogenen Objekt (5) zugehörigen Person (7) ein rechtzeitiges Anhalten des Fahrzeugs (6) möglich ist.

7. Fahrerassistenzvorrichtung (1) nach einem der vorhergehenden Ansprüche, wobei die Steuereinrichtung (6) ausgebildet ist, das Fahrzeug (2) anzuhalten, wenn eine Person als die dem kinderbezogenen Objekt zugehörige Person (7) ausgewertet ist.

8. Fahrerassistenzvorrichtung (1) nach einem der vorhergehenden Ansprüche, wobei eine Person als die dem kinderbezogenen Objekt (5) zugehörige Person (7) ausgewertet ist, sollte ein Abstand (A2) zwischen der Person und dem kinderbezogenen Objekt (5) einen vorgegebenen Abstandsgrenzwert unterschreiten, die Person sich auf das stehende Objekt (5) zubewegen und/oder die Person und das fortbewegende Objekt (5) die gleiche Bewegungsrichtung (B) aufweisen.

9. Fahrzeug (2) mit einer Fahrerassistenzvorrichtung (1) nach einem der vorhergehenden Ansprüche.

10. Verfahren zur Unterstützung eines Fahrzeugführers beim Führen eines Fahrzeugs (2) mit einer Fahrerassistenzvorrichtung (1) nach einem der vorhergehenden Ansprüche 1 bis 9, **gekennzeichnet durch** folgende Schritte:
a) Aufnahme mindestens eines Bilds eines vorausliegenden Umgebungsbereichs des Fahrzeugs;
b) Auswertung von mindestens einem kinderbezogenen Objekt aus dem mindestens einen aufgenommenen Bild;
c) Einleiten von mindestens einer Kollisionsprävention des Fahrzeugs (2) mit einer potenziell erscheinenden, dem kinderbezogenen Objekt (5) zugehörigen Person (7) in Abhängigkeit eines ausgewerteten Abstands (A1) des Fahrzeugs (2) zum kinderbezogenen Objekt (5).
